# EUROPEAN PATENT SPECIFICATION

(11) **EP 1 110 136 B1**
(45) Date of publication and mention of the grant of the patent: **06.03.2002**
(21) Application number: 99928775.8
(22) Date of filing: 17.06.1999
(51) Int. Cl.: G06F 1/20

(54) **CONTROL OF MEMORY ACCESS OPERATIONS**
STEUERUNG VON SPEICHERZUGRIFFSOPERATIONEN
CONTROLE DE L'ACCES MEMOIRE

(30) Priority: 01.09.1998 US 144861
(43) Date of publication of application: 27.06.2001
(73) Proprietor: INTEL CORPORATION, Santa Clara, CA 95052 (US)
(72) Inventor: SONGER, Neil, Santa Clara, CA 95051 (US); JAIN, Satchitanand, San Jose, CA 95129 (US); REINHARDT, Dennis, Palo Alto, CA 94303 (US); CHO, Sung-Soo, Sunnyvale, CA 94087 (US)
(74) Representative: Wombwell, Francis
(86) International application number: US9913754
(87) International publication number: WO0013074

(56) References cited:
- US-A- 5 490 059
- PATENT ABSTRACTS OF JAPAN vol. 014, no. 129 (P-1020), 12 March 1990 (1990-03-12) & JP 01 321513 A (MITSUBISHI ELECTRIC CORP), 27 December 1989 (1989-12-27)

## Description

### Background

The invention relates generally to controlling memory access, and more particularly to restricting memory accesses during periods of elevated operating temperature in a computer system.

Modem computer systems are being manufactured in smaller and smaller enclosures or, alternatively, include more and more computational hardware in an enclosure of a given size. A consequence of this trend is that thermal loading of computer system components is increasing. Because of this, thermal management techniques are becoming an important design consideration. For example, many computer systems employ active cooling devices such as fans to reduce component operating temperatures by drawing cool air through the computer system's operating environment (enclosure). Many computer systems also employ passive thermal control techniques such as the use of heat sinks on system components.

As computer system memory integration levels and operating speeds increase, the amount of heat energy discharged by memory devices also increases. This added heat contributes to the thermal load of all components in a computer system. Up to a point (e.g., operating speed and/or system integration), passive techniques such as providing memory devices with a heat sink have proven adequate. Past this however, active techniques employing fans are typically the only alternative. Drawbacks to active cooling of memory devices include the need for fans (which themselves consume energy and generate heat) and the need to place memory devices in a position where a fan can provide cooling. These and other design considerations have limited the use and usefulness of available memory cooling techniques.

The present invention addresses these and other issues related to heating in a computer system. In particular, various embodiments of the invention are directed to controlling access to memory devices so as to reduce the amount of heat energy discharged by the devices. Embodiments in accordance with the invention may provide these and other benefits (described below) without using fans, or other standard active cooling techniques.

### Summary

In one embodiment the invention provides a method to control access to computer system memory. The method includes receiving a signal indicating that a temperature of the memory has exceeded a first specified value, blocking access to the memory during a first interval while the temperature continues to exceed the first specified value, and allowing access to the memory during a second interval while the temperature continues to exceed the first specified value.

Methods in accordance with embodiments of the invention may be stored in any media that is readable and executable by a programmable control device such as, for example, a microprocessor or a custom designed state machine. In another embodiment a device and computer system are provided to control access to computer system memory.

### Brief Description of the Drawings

Figure 1 shows a computer system in accordance with one embodiment of the invention.
Figure 2 shows a flow chart of a method to restrict memory access in accordance with one embodiment of the invention.
Figure 3 shows a bridge circuit in accordance with one embodiment of the invention.
Figure 4 shows a conceptual state diagram for a memory controller in accordance with one embodiment of the invention.
Figure 5 shows a flow chart of another method to restrict memory access in accordance with one embodiment of the invention.
Figure 6 shows a flow chart of yet another method to restrict memory access in accordance with one embodiment of the invention.
Figure 7 shows a computer system in accordance with another embodiment of the invention.
Figure 8 shows a flow chart of a method to restrict memory access in the system of FIG. 7 in accordance with one embodiment of the invention.

### Detailed Description

Techniques (methods and devices) to control memory access in response to the thermal condition of a memory system are described. The following embodiments of this inventive concept are illustrative only and are not to be considered limiting in any respect.

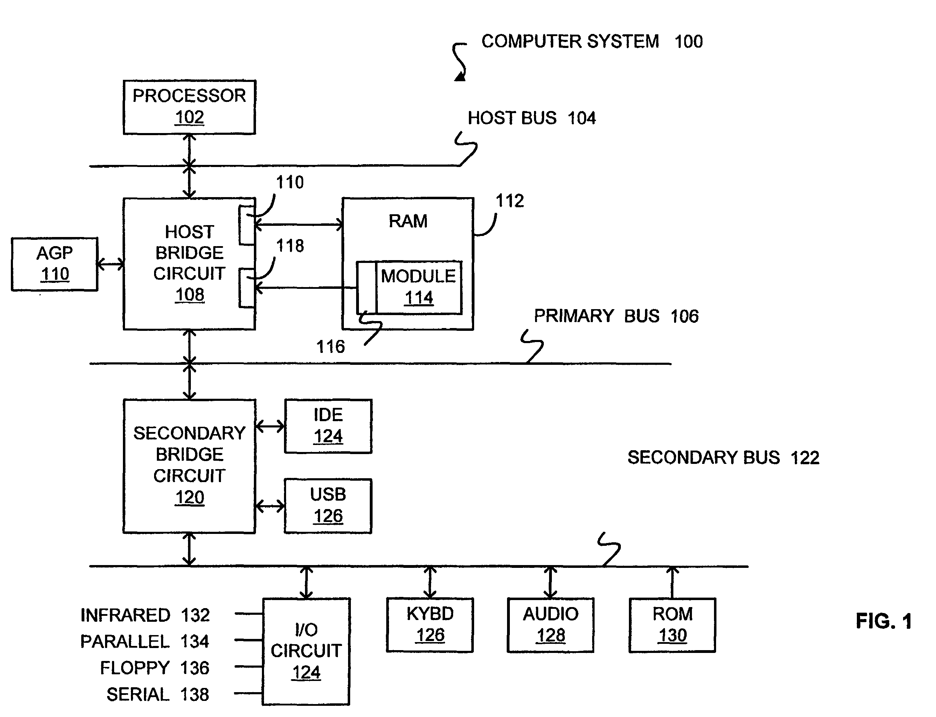

Referring to FIG. 1, an illustrative computer system 100 in accordance with one embodiment of the invention includes host processor 102 coupled to host bus 104 which, in turn, is coupled to primary bus 106 through host bridge circuit 108. Illustrative host processors 102 include the PENTIUM® family of processors and the 80X86 families of processors from Intel Corporation. One illustrative primary bus 106 is the peripheral component interconnect (PCI) bus.

In addition to coupling host bus 104 to primary bus 106, host bridge circuit 108 provides interface 110 to system random access memory (RAM) 112. System RAM 112 comprises memory module 114, and memory module 114 comprises one or more thermal sensors 116. For example, in one embodiment two thermal sensors are used -- one on each side of memory module 114. Thermal sensor 116 communicates with host bridge circuit 108 through input-output (I/O) interface 118. Host bridge circuit 108 may also provide an accelerated graphics port (AGP) interface through which, for example, a video controller and associated display unit may be coupled (not shown). An illustrative I/O interface 118 is a general purpose input-output (GPIO) interface. One illustrative thermal sensor 116 is a thermal diode.

Secondary bridge circuit 120 couples primary bus 106 to secondary bus 122, while also providing integrated device electronics (IDE) 124 and universal serial bus (USB) 126 interfaces. One illustrative secondary bridge circuit 120 is the 82371AB PCI-to-ISA/IDE controller made by Intel Corporation, and one illustrative secondary bus 122 is the industry standard architecture (ISA) bus. Common IDE devices include magnetic and optical disk drives. Also coupled to computer system 100 through secondary bus 122 are input-output (I/O) circuit 124, keyboard controller (KYBD) 126, audio device 128, and system read only memory (ROM) 130. Input-output circuit 124 may provide an interface for infrared 132, parallel 134, floppy disk 136, and serial 138 ports.

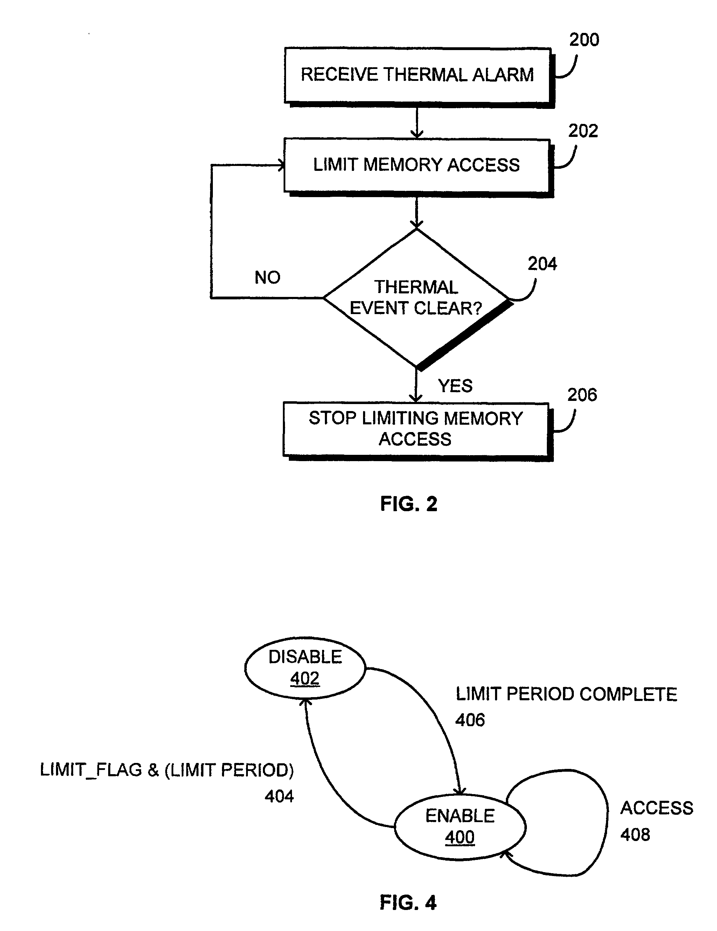

Figure 2 illustrates one method in accordance with the invention to control memory access in response to the thermal behavior of memory module 114. When the temperature of memory module 114 exceeds the threshold of sensor 116, host bridge circuit 108 receives a thermal alarm via I/O interface 118 (block 200). In one embodiment, sensor 116 is an inexpensive sensor whose thermal set-point is preset/fixed. In another embodiment, sensor 116 is a standard sensor whose thermal set-point may be dynamically set under software control of computer system 100 through host bridge circuit 108 and I/O interface 118. Sensor 116 may further provide hysteresis. Following reception of the thermal alarm, a memory control circuit limits access to memory module 114 for a specified time (block 202). In the embodiment illustrated in FIG. 1, the memory control circuit is incorporated within host bridge circuit 108 and interfaces with RAM 112 via interface 110. Memory access may be limited (e.g., throttled) until thermal sensor 116 indicates memory module 114's temperature is below a specified set-point (the 'no' prong of diamond 204). When the thermal alarm has cleared (the 'yes' prong of diamond 204), throttling operations cease (block 206).

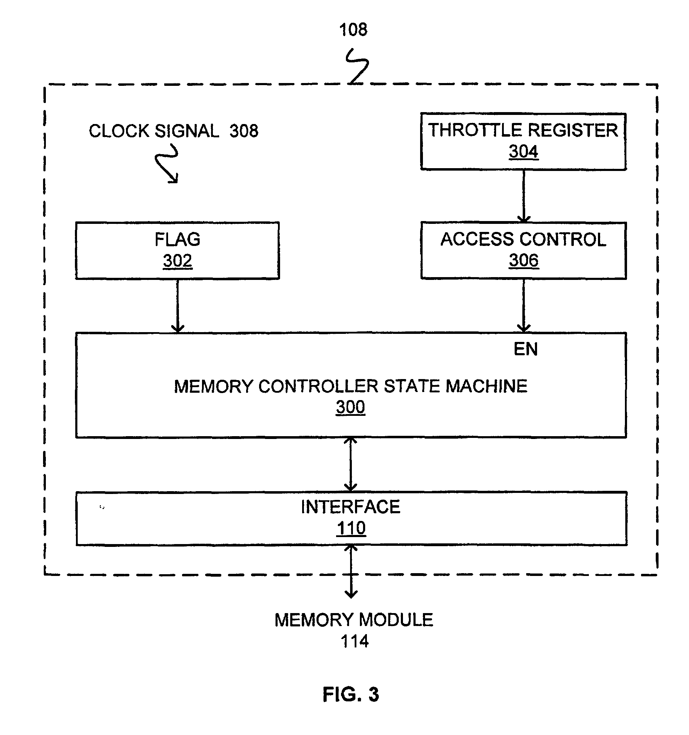

Referring to FIG. 3, a functional block diagram of host bridge circuit 108 in accordance with one embodiment of the invention may include memory controller state machine 300 coupled to interface 110, flag 302 to indicate when a thermal alarm condition exists, throttle register 304 to store a value indicative of an access limit time, and access control circuit 306. Access control circuit 306, in combination with flag 302 and throttle register 304, may selectively enable and disable memory controller 310 to effect memory access throttling operations.

Referring now to FIGS. 2 and 3, when thermal sensor 116 indicates a memory module thermal threshold has been exceeded (block 200), flag 302 may be set (e.g., to a '1' value) directly by sensor 116 output, through control logic initiated by sensor 116 output, or by software initiated by sensor 116 output. When flag 302 is set, access control circuit 306 may disable controller 300 to restrict access to memory module 114 in accordance with a value specified by throttle register 304 (block 202). Controller 300 may be disabled by placing it into a state in which it does not generate memory control signals such as row and column address strobe signals for standard dynamic RAM (DRAM) type memory, or row, column, bank, and start signals for RAMBUS® type memory. That time period during which memory controller state machine 300 is disabled by access control circuit 306 is referred to as the limit period. On completion of a limit period, access control circuit 306 may transition memory controller 300 to a normal operating mode in which it can generate memory control signals.

Thus, access control circuit 306 cyclically disables and enables controller 300 during an alarm condition (the 'no' prong of diamond 204). When the thermal alarm is cleared (the 'yes' prong of diamond 204), flag 302 may be cleared allowing memory controller 300 to continuously operate in a mode where memory control signals may be generated (block 206).

In one embodiment, throttle register 304 is a three-bit register whose value is interpreted by access control circuit 306 in accordance with Table ZZ. As shown, when throttle register 304's value is '0 0 0,' access control circuit 306 does not restrict memory access operations. When throttle register 304's value is '0 1 0,' access control circuit 306 disables controller 300 for approximately 25% of the time. For example, access control circuit 306 may count 100 clock cycles (of clock signal 308 driving operation of memory controller 300) and disable controller 300 for 25 of those cycles.

**Table ZZ.**

| Throttle Register Interpretation Example | |
|---|---|
| Throttle Register Value | Access Restriction |
| 0 0 0 | Do not limit access |
| 0 0 1 | limit access by approximately 12.5% |
| 0 1 0 | limit access by approximately 25% |
| 0 1 1 | limit access by approximately 37.5% |
| 1 0 0 | limit access by approximately 50% |
| 1 0 1 | limit access by approximately 62.5% |
| 110 | limit access by approximately 75% |
| 111 | limit access by approximately 87.5% |

It will be understood that access control circuit 306 may interpret throttle register 304 input in any number of ways. For example, the throttle register's value may indicate an increment of a specified delay. In this embodiment, a value of '0' could indicate no delay, a value of 2 could indicate a delay of two time increments, and a value of 'n' could indicate a delay of n time increments. A time increment may be any specified amount of time such as, for example, 1 microsecond or 100 microseconds. It will further be understood that throttle register 304's value may be set/initialized at computer system 100 power-up (e.g., under firmware control), or at some subsequent time under hardware or software control. In yet another embodiment, throttle register 304's value may indicate how many memory access attempts (read and/or write operations) to block before allowing one, or a specified number of access operations (read or write).

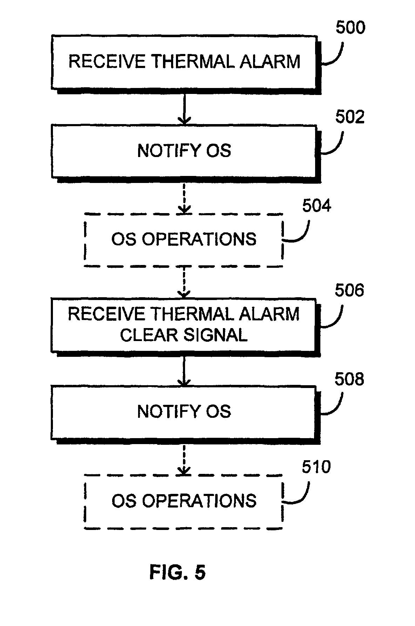

Figure 4 illustrates the concept of transitioning memory controller state machine 300 between an enable or normal operating state 400 in which memory access control signals are generated, and a disable state 402 in which memory control signals are not generated. When a thermal alarm condition does not exist, or during an alarm condition but when access control circuit 306 is not disabling controller 300 (i.e., not during a limit period), memory controller 300 may be modeled as operating in enable state 400. When flag 302 is set (indicating a thermal alarm condition) and a limit period is initiated, memory controller 300 transitions to the disable state 402 (event 404). On completion of the limit period, memory controller may transition back to the enable state (event 406). While in enable state 400, access control signals may be generated (event 408). In one embodiment, if a memory access is in progress when it is time to initiate a limit period, the memory access is aborted. In another embodiment, a memory access initiated before event 404 occurs is allowed to proceed to completion before controller 300 is transitioned to disable state 402.

Figure 5 illustrates another method to regulate the thermal behavior of memory module 114 in accordance with the invention. When the temperature of memory module 114 exceeds the threshold of sensor 116, host bridge circuit 108 receives a thermal alarm via I/O interface 118 (block 500). On alarm reception, bridge circuit 108 notifies computer system 100's operating system (OS) of the thermal alarm (block 502). For example, if the OS is an advanced power management (APM) operating system, bridge circuit 108 may generate a system management interrupt (SMI) to initiate a basic input-output system (BIOS) routine to perform the required throttling operations. (See, "Advanced Power Management (APM) BIOS Interface Specification," Rev. 1.2, 1996, copyright Intel Corporation and Microsoft Corporation.) If the OS is an advanced configuration and power interface (ACPI) operating system, bridge circuit 108 may generate a system control interrupt (SCI). (See, "Advanced Configuration and Power Interface Specification," Rev. 1.0, 1996, copyright Intel Corporation, Microsoft Corporation, and Toshiba Corporation.) In accordance with the ACPI specification, a software control method may then be executed to regulate the access behavior of memory module 114 (block 504) -- that is, the approach described above and in FIG. 2 may use ACPI specified registers and counters to implement an OS controlled memory throttling mechanism. When thermal sensor 116 indicates the thermal event has passed, bridge circuit 108 notifies the OS (block 508). The OS then ceases executing the memory module thermal regulation control method and returns to normal operations (block 510).

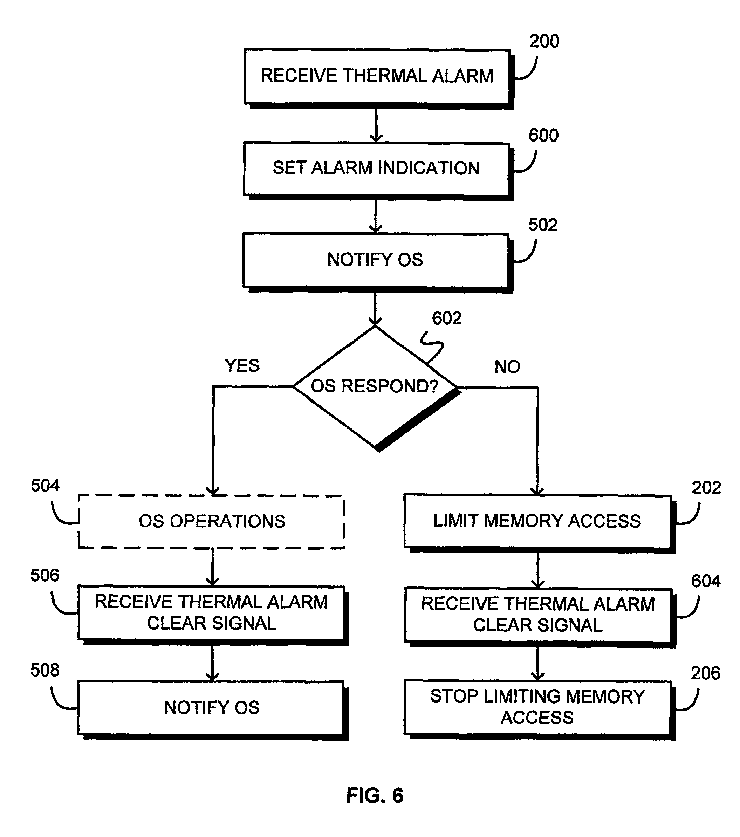

Figure 6 illustrates yet another method to regulate the thermal behavior of memory module 114 in accordance with the invention. The method of FIG. 6 combines the approaches of FIGS. 2 and 5 with the bridge circuit of FIG. 3. As before, when the temperature of memory module 114 exceeds the threshold of sensor 116, host bridge circuit 108 receives a thermal alarm via I/O interface 118 (block 200). On alarm reception, bridge circuit 108 may set an indication such as, for example, flag 302 (block 600), and notify the OS of the alarm condition (block 502). Next, bridge circuit 108 may watch for the OS to respond to the thermal alert notification. If the OS fails to initiate a response within a specified period of time (the 'no' prong of diamond 602), bridge circuit 108 may itself initiate thermal throttling operations (block 202). For example, bridge circuit 108 may initiate a count-down timer when it notifies the OS of the thermal event in block 502. The timer may be reset by the OS when it responds to the thermal event. Thus, if the counter reaches zero before being reset by the OS, bridge circuit 108 may itself initiate thermal throttling operations. A generally acceptable time within which the OS should respond is 1 second, and preferably within approximately 500 milliseconds. When thermal sensor 116 indicates the thermal alarm is clear (block 604), throttling operations may stop (block 206). If the OS responds within the specified time period (the 'yes' prong of diamond 602), the OS manages the thermal event through, for example, ACPI control methods (if the OS is an ACPI OS) or BIOS routines (if the OS is an APM OS) (block 504). When the thermal alarm clear signal is received (block 506), bridge circuit 108 may again notify the OS (block 508).

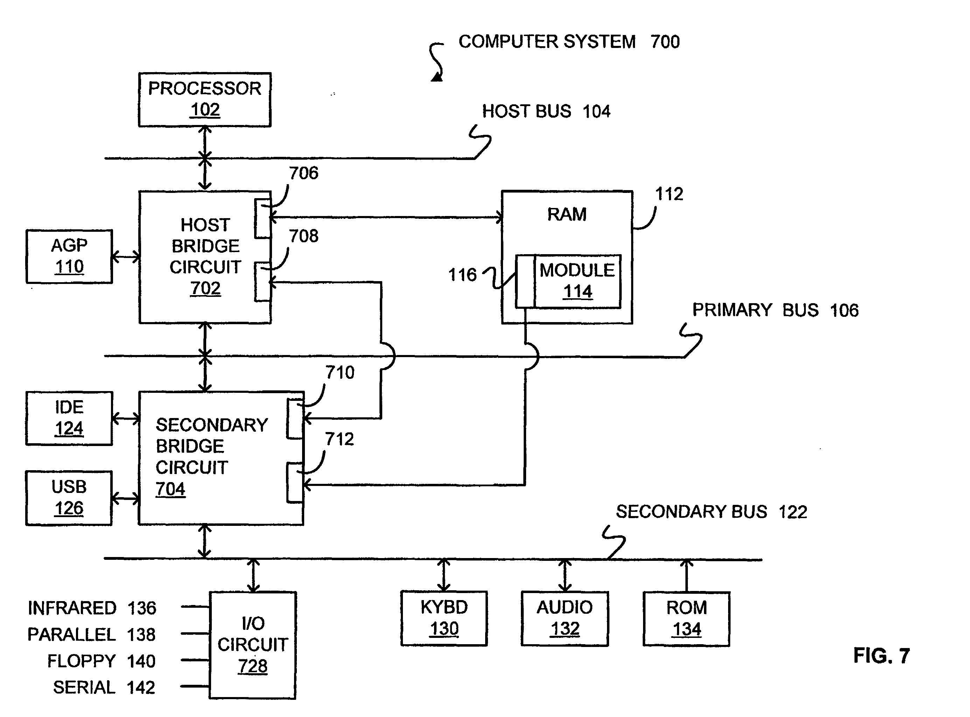

Referring to FIG. 7, an illustrative computer system 700 in accordance with another embodiment of the invention may include many of the same components as computer system 100. For example, host processor 102, host bus 104, primary bus 106, secondary bus 122, system RAM 112, memory module 114, and thermal sensor 116. Computer system 700 may also include host bridge circuit 702 and secondary bridge 704. An illustrative host bridge circuit 702 is the 82349TX controller, and an illustrative secondary bridge circuit is the 82371AB PCI-to-ISA/IDE controller, both manufactured by Intel Corporation.

Host bridge circuit 702 provides RAM interface 706 and bus interface 708. Secondary bridge circuit 704 provides bus interface 710 and I/O interface 712. Bus interfaces 708 and 710 provide a mechanism by which host bridge circuit 702 and secondary bridge circuit 704 may communicate. Bus interfaces 708 and 710 may, for example, be system management bus (SMBus) interfaces as specified by Intel Corporation ("System Management Bus Specification," Rev. 1.0, 1995) or inter-integrated circuit control (I2C) bus interfaces as specified by Phillips Semiconductors ("I2C Bus Specification," 1995). Input-output interface 712 may, for example, be a GPIO interface. Input-output interface 712 provides a mechanism to receive input from thermal sensor 116.

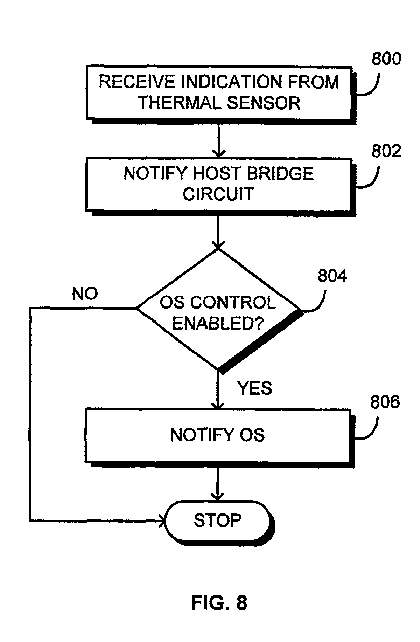

Referring now to FIG. 8, when the temperature of memory module 114 exceeds, or drops below, the threshold of sensor 116, secondary bridge circuit 704 receives indication of this via I/O interface 712 (block 800). Secondary bridge circuit 704 notifies host bridge circuit 702 of the thermal condition via the communication bus established by interfaces 708 and 710 (block 802). If secondary bridge circuit 704 has been initialized to notify host processor 102 of thermal events, e.g., during computer system 100 power-up operations (the 'yes' prong of diamond 804), secondary bridge circuit 704 notifies the OS by, for example, generating an SCI signal (block 806). If secondary bridge circuit 704 has not been initialized to notify host processor 102 of thermal events (the 'no' prong of diamond 804), secondary bridge circuit processing terminates.

Once notified of a thermal event (indicating either that memory module 116's temperature has exceeded sensor 116 threshold or that it has decreased below its threshold), host bridge circuit may process the information via a method in accordance with FIG. 2 (hardware oriented approach), FIG. 5 (software oriented approach), or FIG. 6 (combination of hardware and software approaches). One benefit of computer system 700 is that some currently available host bridge circuits provide bus interface 708, but do not provide I/O interface 712, while many currently available secondary bridge circuits provide both bus interface 710 and I/O interface 712. In addition, currently available host bridge circuits may include timer and register circuits (e.g., flag 302 and throttle register 304) that may be used to implement a method in accordance with the invention.

Thermal regulation in accordance with the invention may restrict access to memory thereby reducing the generation of thermal energy in a computer system. It is significant that techniques in accordance with the invention may provide this capability without requiring additional volume for parts (thermal sensors 116 may be incorporated within existing memory module designs), or the consumption of significant amounts of power such as required by fans.

Various changes in the materials, components, circuit elements, as well as in the details of the illustrated operational methods are possible without departing from the scope of the claims. For instance, the illustrative system of FIGS. 1 and 7 may include more or fewer elements than shown. In addition, acts in accordance with FIGS. 2, 5, 6, and 8 may be performed by a programmable control device executing instructions organized into a program module. A programmable control device may be a computer processor or a custom designed state machine. Custom designed state machines may be embodied in a hardware device such as a printed circuit board comprising discrete logic, integrated circuits, or specially designed application specific integrated circuits (ASIC). Storage devices suitable for tangibly embodying program instructions include all forms of non-volatile memory including, but not limited to: semiconductor memory devices such as EPROM, EEPROM, and flash devices; magnetic disks (fixed, floppy, and removable); other magnetic media such as tape; and optical media such as CD-ROM disks.

## Claims

1. A method to control computer system memory access comprising:
receiving a signal indicating that a temperature of a memory has exceeded a first specified value;
blocking access to the memory during a first interval while the temperature continues to exceed the first specified value; and
allowing access to the memory during a second interval while the temperature continues to exceed the first specified value.

2. The method of claim 1, further comprising:
receiving an indication the temperature of the memory is below a second specified value; and
allowing unrestricted access to the memory.

3. The method of claim 2, wherein the first specified value and the second specified value are the same.

4. The method of claim 2, wherein the second specified value is less than the first specified value.

5. The method of claim 1, wherein the first interval comprises a specified number of memory access attempts, and the second interval comprises a different number of memory access operations.

6. A program storage device, readable by a programmable control device, comprising:
instructions stored on the program storage device for causing the programmable control device to
receive an indication that a temperature of a memory has exceeded a first specified value;
block access to the memory during a first interval while the indication indicates the temperature continues to exceed the first specified value; and
allow access to the memory during a second interval while the indication indicates the temperature continues to exceed the first specified value.

7. The program storage device of claim 11, further comprising instructions to:
receive an indication the temperature of the memory is below a second specified value; and
allow unrestricted access to the memory.

8. The program storage device of claim 6, wherein the first interval comprises a specified number of memory access attempts, and the second interval comprises a different number of memory access operations.

9. A computer system comprising:
a bus;
a processor operatively coupled to the bus;
a memory operatively coupled to the bus;
a receiver to receive a signal indicating a temperature of the memory has exceed a first specified value; and
a control circuit, operatively coupled to the receiver and to the memory, to block access to the memory during a first interval while the temperature continues to exceed the first specified value, and to allow access to the memory during a second interval while the temperature continues to exceed the first specified value.

10. The computer system of claim 9, further comprising:
a reset circuit, operatively coupled to the receiver, the control circuit, and the memory, to allow unrestricted access to the memory when the receiver receives a signal indicating the temperature is below a specified second temperature.

## Patentansprüche

1. Ein Verfahren zum Steuern eines Computersystemspeicherzugriffs, umfassend:
Empfangen eines Signals, das anzeigt, daß eine Temperatur eines Speichers einen ersten spezifizierten Wert überschritten hat;
Blockieren des Zugriffs auf den Speicher während eines ersten Intervalls, während die Temperatur weiterhin den ersten spezifizierten Wert überschreitet;
Gestatten des Zugriffs auf den Speicher während eines zweiten Intervalls, während die Temperatur weiterhin den ersten spezifizierten Wert überschreitet.

2. Das Verfahren nach Anspruch 1, ferner umfassend:
Empfangen einer Anzeige, daß die Temperatur des Speichers unter einem zweiten spezifizierten Wert ist; und
Gestatten eines uneingeschränkten Zugriffs auf den Speicher.

3. Das Verfahren nach Anspruch 2, wobei der erste spezifizierte Wert und der zweite spezifizierte Wert gleich sind.

4. Das Verfahren nach Anspruch 2, wobei der zweite spezifizierte Wert geringer als der erste spezifizierte Wert ist.

5. Das Verfahren nach Anspruch 1, wobei das erste Intervall eine spezifizierte Anzahl von Speicherzugriffsversuchen umfaßt und wobei das zweite Intervall eine abweichende Anzahl von Speicherzugriffsoperationen aufweist.

6. Eine Programmspeichereinrichtung, die von einer programmierbaren Steuereinrichtung lesbar ist, aufweisend:
in der Programmspeichereinrichtung gespeicherte Befehle, die die programmierbare Steuereinrichtung veranlassen,
eine Anzeige zu empfangen, daß eine Temperatur eines Speichers einen ersten spezifizierten Wert überschritten hat;
einen Zugriff auf den Speicher während eines ersten Intervalls, während die Anzeige anzeigt, daß die Temperatur weiterhin den ersten spezifizierten Wert überschreitet, zu blockieren; und
einen Zugriff auf den Speicher während eines zweiten Intervalls, während die Anzeige anzeigt, daß die Temperatur weiterhin den ersten spezifizierten Wert überschritten hat, zu gestatten.

7. Die Programmspeichereinrichtung nach Anspruch 6, ferner enthaltend Befehle zum:
Empfangen einer Anzeige, daß die Temperatur des Speichers unter einem zweiten spezifizierten Wert ist; und
Gestatten eines uneingeschränkten Zugriffs auf den Speicher.

8. Die Programmspeichereinrichtung nach Anspruch 6, wobei das erste Intervall eine spezifizierte Anzahl von Speicherzugriffsversuchen aufweist und wobei das zweite Intervall eine abweichende Anzahl von Speicherzugriffsoperationen aufweist.

9. Ein Computersystem, aufweisend:
einen Bus;
einen betriebsfähig mit dem Bus gekoppelten Prozessor;
einen betriebsfähig mit dem Bus gekoppelten Speicher;
einen Empfänger zum Empfangen eines Signals, das anzeigt, daß eine Temperatur des Speichers einen ersten spezifizierten Wert überschritten hat; und
eine betriebsfähig mit dem Empfänger und mit dem Speicher gekoppelte Steuerschaltung zum Blockieren des Zugriffs auf den Speicher während eines ersten Intervalls, während die Temperatur weiterhin den ersten spezifizierten Wert überschreitet, und zum Gestatten des Zugriffs auf den Speicher während eines zweiten Intervalls, während die Temperatur weiterhin den ersten spezifizierten Wert überschreitet.

10. Das Computersystem nach Anspruch 9, ferner aufweisend:
eine betriebsfähig mit dem Empfänger, der Steuerschaltung und dem Speicher gekoppelte Rücksetzschaltung zum Ermöglichen eines uneingeschränkten Zugriffs auf den Speicher, wenn der Empfänger ein Signal empfängt, das anzeigt, daß die Temperatur unter einer spezifizierten zweiten Temperatur ist.

## Revendications

1. Procédé de commande de l'accès en mémoire d'un système informatique, comprenant :
- la réception d'un signal indiquant que la température d'une mémoire a dépassé une première valeur spécifiée ;
- le blocage de l'accès à la mémoire pendant un premier intervalle tandis que la température continue à dépasser la première valeur spécifiée ; et
- l'autorisation de l'accès à la mémoire pendant un second intervalle tandis que la température continue à dépasser la première valeur spécifiée.

2. Procédé selon la revendication 1, comprenant, de plus :
- la réception d'une indication du fait que la température de la mémoire est en dessous d'une seconde valeur spécifiée ; et
- l'autorisation d'un accès non restreint à la mémoire.

3. Procédé selon la revendication 2, selon lequel la première valeur spécifiée et la seconde valeur spécifiée sont identiques.

4. Procédé selon la revendication 2, selon lequel la seconde valeur spécifiée est inférieure à la première valeur spécifiée.

5. Procédé selon la revendication 1, selon lequel le premier intervalle comprend un nombre spécifié de tentatives d'accès à la mémoire et le second intervalle comprend un nombre différent d'opérations d'accès à la mémoire.

6. Dispositif de stockage de programme, pouvant être lu par un dispositif de commande programmable, comprenant :
- des instructions stockées dans le dispositif de stockage de programme pour amener le dispositif de commande programmable à recevoir une indication du fait qu'une température d'une mémoire a dépassé une première valeur spécifiée ;
- un blocage d'accès à la mémoire pendant un premier intervalle tandis que l'indication précise que la température continue à dépasser la première valeur spécifiée ; et
- l'autorisation de l'accès à la mémoire pendant un second intervalle tandis que l'indication précise que la température continue à dépasser la première valeur spécifiée.

7. Dispositif de stockage de programme selon la revendication 6, comprenant, de plus, des instructions pour :
- recevoir une indication de la température de la mémoire en dessous d'une seconde valeur spécifiée ; et
- autoriser un accès sans restriction à la mémoire.

8. Dispositif de stockage de programme selon la revendication 6, dans lequel le premier intervalle comprend un nombre spécifié de tentatives d'accès à la mémoire et le second intervalle comprend un nombre différent d'opérations d'accès à la mémoire.

9. Système informatique, comprenant :
- un bus ;
- un processeur couplé de façon fonctionnelle au bus ;
- une mémoire couplée, de façon fonctionnelle, au bus ;
- un récepteur pour recevoir un signal indiquant qu'une température de la mémoire a dépassé une première valeur spécifiée ; et
- un circuit de commande couplé, de façon fonctionnelle, au récepteur et à la mémoire pour bloquer un accès à la mémoire pendant un premier intervalle tandis que la température continue à dépasser la première valeur spécifiée et pour autoriser un accès à la mémoire pendant un second intervalle tandis que la température continue à dépasser la première valeur spécifiée.

10. Système informatique selon la revendication 9, comprenant, de plus :
- un circuit de réinitialisation couplé, de façon fonctionnelle, au récepteur, au circuit de commande et à la mémoire pour autoriser un accès sans restriction à la mémoire lorsque le récepteur reçoit un signal indiquant que la température est inférieure à une seconde température spécifiée.
